# EUROPEAN PATENT APPLICATION

(11) **EP 1 786 149 A1**
(43) Date of publication of application: **16.05.2007**
(21) Application number: 05024740.2
(22) Date of filing: 11.11.2005
(51) Int. Cl.: H04L 12/56, H04Q 11/00, H04L 12/28

(54) **A method, communication system, central communication unit and a peripheral communication unit for controlling accesses to a shared medium**

(71) Applicant: SIEMENS AKTIENGESELLSCHAFT, 80333 München (DE)
(72) Inventor: Hajduczenia, Marek, 4505-314 Fiaes (PT); Monteiro, Paulo, 3830-209 IIhavo (PT); Silva, Henrique Prof., 3030-076 Coimbra (PT)

(57) **Abstract**

Under the inventive method for controlling accesses to a shared medium between a central communication unit (OLT) and at least one peripheral communication unit (ONU), there is at least one logical connection (LLID) established between the central communication unit (OLT) and the at least one peripheral communication unit (ONU). Several queues (packet queues), which are located in the at least one peripheral communication unit (ONU), are assigned to the at least one logical connection (LLID), whereby status-information (eRE-PORT MPCP) of the respective assigned queues is transmitted to the central communicate unit (OLT) and is evaluated centrally. Dependent on the result of the evaluation at least one control message (eGATE MPCP) is generated by the central communication unit (OLT) and sent to the at least one peripheral communication unit (ONU). The control message (eGATE MPCP) contains information for controlling the processing of the queues assigned to the at least one logical connection (LLID).

## Description

Access networks connect business and residential subscribers to the central offices of service providers, which in turn are connected to metropolitan area networks (MANs) or wide area networks (WANs). Access networks are commonly referred to as the last mile or first mile, where the latter term emphasizes their importance to subscribers. In today's access networks, telephone companies deploy digital subscriber loop (xDSL) technologies and cable companies deploy cable modems. Typically, these access networks are hybrid fiber coax (HFC) systems with an optical fiber based feeder network between central office and remote node and an electrical distribution network between remote node and subscribers. These access technologies are unable to provide enough bandwidth to current high-speed Gigabit Ethernet local area networks (LANs) and evolving services, e.g., distributed gaming or video on demand. Future first-mile solutions not only have to provide more bandwidth but also have to meet the cost-sensitivity constraints of access networks arising from the small number of cost sharing subscribers.

A passive optical network (PON) is a point-to-multipoint optical access network with no active elements in signal path from source to destination. Here all the transmissions are performed between the OLT (optical line terminal) and ONUs (optical network units). The OLT resides in the central office of network service providers and connect the optical access network to the Metropolitan area network (MAN) or wide area network (WAN). On the other hand the ONU is located at the end user location and provides broadband video, data and voice services. Passive optical networks (PONs) address the last mile of communication infrastructure between the service provider's central office (CO), head end or point of presence (POP) and business or residential customer locations. Data, voice and video must be offered over the same high-speed connection with guarantees on Quality-of -Service and the ability to purchase bandwidth as on need basis.

Ethernet PONs (EPONs) have gained a great amount of interest both in industry and academia as a promising cost-effective solution of next-generation broadband access networks, as illustrated by the formation of several fora and working groups, including the EPON Forum (http://www.ieeecommunities.org/epon), the Ethernet in the First Mile Alliance (http://www.efmalliance.org), and the IEEE 802.3ah working group (http://www.ieee802.org/3/efm). EPONs carry data encapsulated in Ethernet frames, which makes it easy to carry IP packets and eases the interoperability with installed Ethernet LANs. EPONs represent the convergence of low-cost Ethernet equipment (switches, network interface cards (NICs)) and low-cost fiber architectures. Furthermore, given the fact that more than 90% of today's data traffic originates from and terminates in Ethernet LANs, EPONs appear to be a natural candidate for future first-mile solutions. The main standardization body behind EPON is the IEEE 802.3ah Task Force. This task force is developing the so-called multipoint control protocol (MPCP) which arbitrates the channel access among central office and subscribers. MPCP is used for dynamically assigning the upstream bandwidth (subscriber-to-service provider), which is the key challenge in the access protocol design for EPONs.

Typically, EPONs (and PONs in general) have a physical tree topology with the central office located at the root and the subscribers connected to the leaf nodes of the tree. At the root of the tree is an optical line terminal (OLT) which is the service provider equipment residing at the central office. The EPON connects the OLT to multiple optical network units (ONU) (the customer premise equipment) through a 1 : N optical splitter/combiner. An ONU can serve a single residential or business subscriber, referred to as Fiber-to-the-Home/Business (FTTH/B), or multiple subscribers, referred to as Fiber-to-the-curb (FTTC). Each ONU buffers data received from the attached subscriber(s). In general, the round-trip time (RTT) between OLT and each ONU is different. Due to the directional properties of the optical splitter/combiner the OLT is able to broadcast data to all ONUs in the downstream direction. In the upstream direction, however, ONUs cannot communicate directly with one another. Instead, each ONU is able to send data only to the OLT. Thus, in the downstream direction an EPON may be viewed as a point-to-multipoint network and in the upstream direction, an EPON may be viewed as a multipoint-to-point network. Due to this fact, the original Ethernet media access control (MAC) protocol does not operate properly since it relies on a broadcast medium.

In the upstream direction, all ONUs share the transmission medium. To avoid collisions, several approaches can be used. Wavelength division multiplexing (WDM) is currently considered cost prohibitive since the OLT would require a tunable receiver or a receiver array to receive data on multiple wavelength channels and each ONU would need to be equipped with a wavelength-specific transceiver. At present, time division multiplexing (TDM) is considered a more cost-effective solution. With TDM a single transceiver is required at the OLT and there is just one type of ONU equipment.

The MPCP arbitration mechanism developed by the IEEE 802.3ah Task Force is used to dynamically assign non-overlapping upstream transmission windows (time slots) to each ONU. Beside auto-discovery, registration, and ranging (RTT computation) operations for newly added ONUs, MPCP provides the signalling infrastructure (control plane) for coordinating the data transmissions from the ONUs to the OLT.

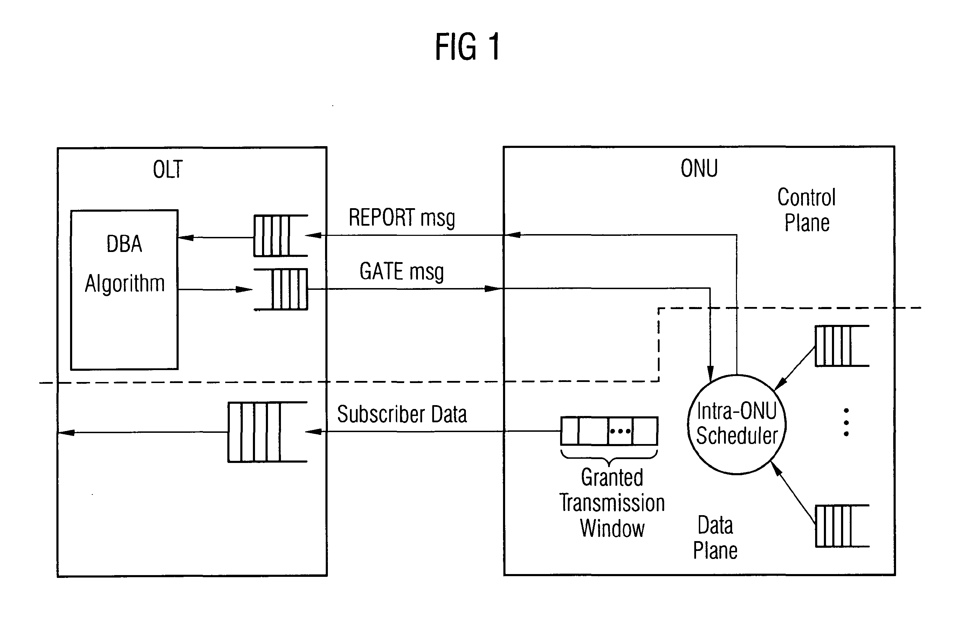

The basic idea is that the upstream bandwidth is divided into bandwidth units via TDM. These units are assigned to the ONUs as is determined by the OLT according to the DBA algorithm in use. The OLT has control over the assignment of these units of bandwidth. These units can be assigned on the fly as needed or can be reserved in advance. For efficiency reasons, any reserved units or fraction of units of bandwidth that go unused can in general be re-assigned on the fly by the OLT to other ONUs that could make use of it. As shown in FIG 1, MPCP uses two types of messages to facilitate arbitration: REPORT and GATE. Each ONU has a set of queues, possibly prioritized, holding Ethernet frames ready for upstream transmission to the OLT. The REPORT message is used by an ONU to report bandwidth requirements (typically in the form of queue occupancies) to the OLT. A REPORT message can support the reporting of up to thirteen queue occupancies of the corresponding ONU. Upon receiving a REPORT message, the OLT passes it to the DBA algorithm module. The DBA module calculates the upstream transmission schedule of all ONUs such that channel collisions are avoided. Note that MPCP does not specify any particular DBA algorithm. MPCP simply provides a framework for the implementation of various DBA algorithms. After executing the DBA algorithm, the OLT transmits GATE messages to issue transmission grants. Each GATE message can support up to four transmission grants. Each transmission grant contains the transmission start time and transmission length of the corresponding ONU. Each ONU updates its local clock using the timestamp contained in each received transmission grant. Thus, each ONU is able to acquire and maintain global synchronization. The transmission start time is expressed as an absolute timestamp according to this global synchronization. Each ONU sends backlogged Ethernet frames during its granted transmission window using its local intra-ONU scheduler. The intra-ONU scheduler schedules the packet transmission from the various local queues. The transmission window may comprise multiple Ethernet frames; packet fragmentation is not allowed. As a consequence, if the next frame does not fit into the current transmission window it has to be deferred to the next granted transmission window.

The above mentioned arbitration mechanism is the basic mechanism that controls the flow of data packets in the EPON and it is used by higher level functions to perform dynamic bandwidth allocation (DBA) and ONU synchronization, and to execute the ranging process. The entity that receives a GATE and responds with a REPORT (if requested by a central controller) is called a logical link or logical connection, and is identified by a Logical Link IDentifier (LLID). LLID is a numeric identifier assigned to a Point-to-Multi-Point P2MP association between an OLT and an ONU, established through the Point-to-Point Emulation sublayer. Each P2MP association is assigned a unique LLID. The P2MP association is bound to an ONU DTE, where a MAC would observe a private association.

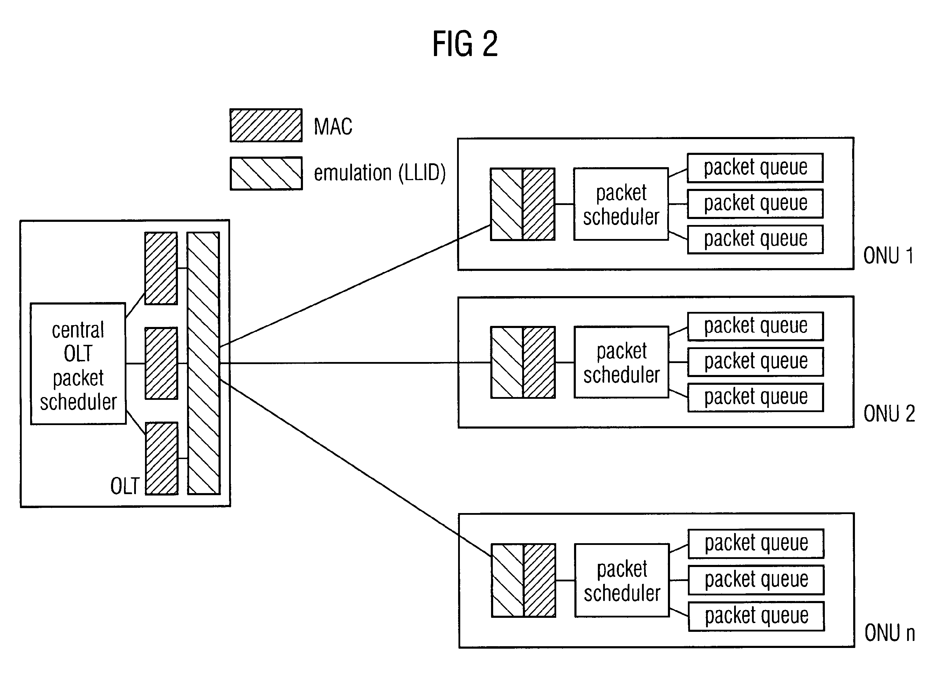

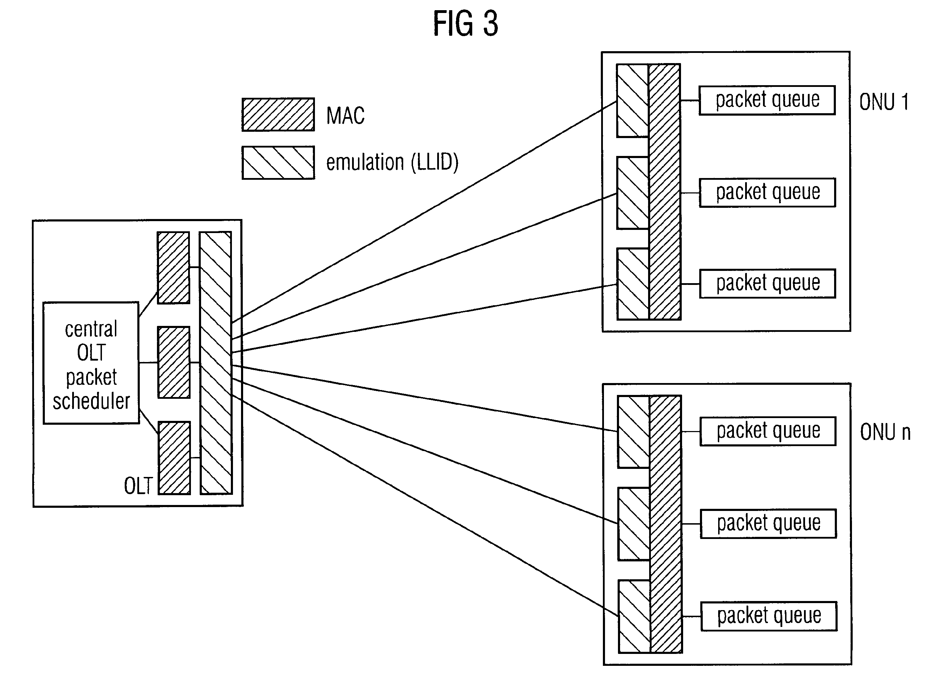

The number of LLIDs per ONU is a design choice and is typically hardware limited only. Additionally, any LLID may have one or more data queues associated with it, used for storing subscriber generated data. The current IEEE 802.3ah standard uses an asymmetrical format for these two control messages:
- REPORT messages carry information upstream about the states of individual queues associated with each particular LLID;
- GATE messages convey aggregate downstream grants pertinent to all of the queues associated with each LLID.
The number of LLIDs instantiated for a particular ONU has a profound impact on the system performance and is actually one of the most important design choices made in the design of a fully functional EPON system with inherent tri-play support. Typically, two solutions are considered:
- one LLID per ONU (solution 1, see FIG 2);
- single LLID per queue (solution 2, see FIG 3).

Both technical approaches are described in detail later in following sections.

The problem is a more flexible LLID assignment system in which each ONU is assigned a pre-defined number of LLID tags, typically greater than 1 (as in single LLID per queue (solution 2)), though the number of LLIDs is smaller than the total number of queues supported by a given ONU. Therefore, this would be an extension of solution 2, allowing the network administrator for full flexibility in administering individual ONUs and defining LLID associations. The current standard IEEE 802.3 ah clause 64 MPCP messaging system is very well poised for the solution 2, where the OLT can grant individual queues as if they were virtual ONUs with a single data queue each. In case of solution 1, the packet scheduling burden is distributed to the ONUs, thereby causing addressing problems within intra-ONU packet schedulers. Under certain network scenarios it is however expected that at least 1 LLID may be assigned multiple queues, in which case the current MPCP system cannot operate efficiently with such an ONU. In case of such an ONU, the LLID that is assigned more than one queue will still have to support full intra-ONU packet scheduling, and thus all benefits of solution 2 are lost.

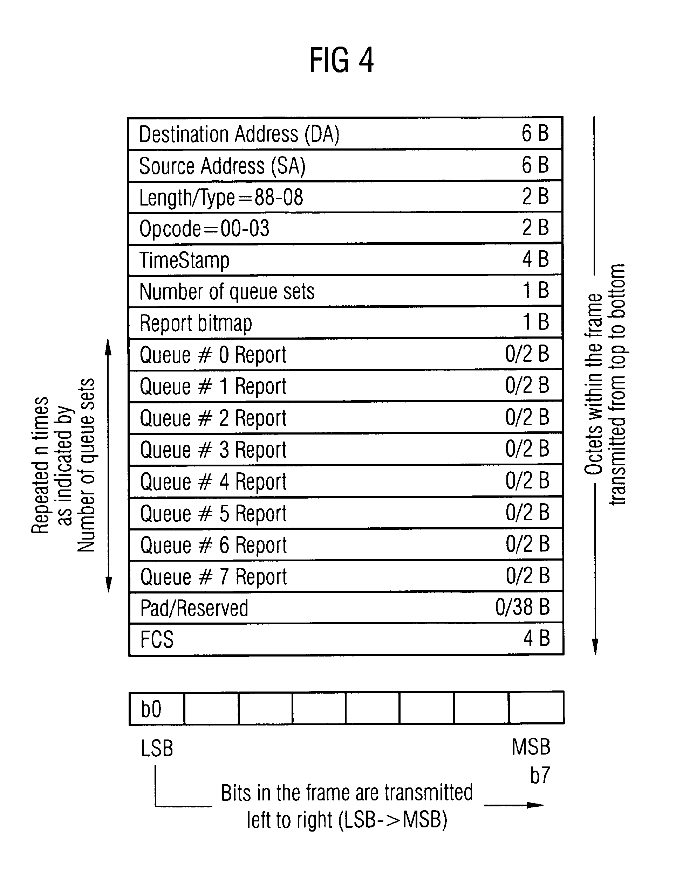

A multiple queue LLID, when requested to create the REPORT MPCP message, produces the current state of the LLID associated with several data queues, providing the OLT with information about individual queues according to the existing REPORT structure (see FIG 4). The OLT based DBA algorithm obtains this data from the upstream transmission originating from this ONU and, based on it, performs upstream slot scheduling both in size and in transmission window time.

However, current GATE MPCP message allows to convey only a single grant message to a given LLID (actually, it allows multiple grant messages per LLID, though the additional grants are scheduled into the future and there is no way to target individual queues inside of a single LLID entity). Thus, in case of a multiple queue LLID, the ONU still has to perform intra packet scheduling, just like it takes place in solution 1. Therefore, all negative effects of the intra-ONU packet scheduling might occur, depending on the employed scheduler. It is also inconsistent for the IEEE 802.3 ah clause 64 standard to allow for separate queue reporting (REPORT message), while the OLT has no means of scheduling transmission from a single queue associated with a multiple-queue LLID identity. The GATE message in the current state is therefore considered as insufficient to provide a flexible network management and assure efficient EPON structure operation, in the case of a full multiple LLID per ONU / multiple queues per LLID scenario.

In order to ensure full compatibility with the standard IEEE 802 Ethernet architecture, EPONs have to employ a P2P (Point to Point connection) emulation, allowing for the optical PHY medium of the network to operate as a virtual collection of P2P dedicated links. In reality, these P2P links are purely virtual and do share the same hardware resources (using TDM multiplexing). The aforementioned P2P emulation mechanisms rely completely on tagging Ethernet frames with a network unique number called the Logical Link ID (LLID).

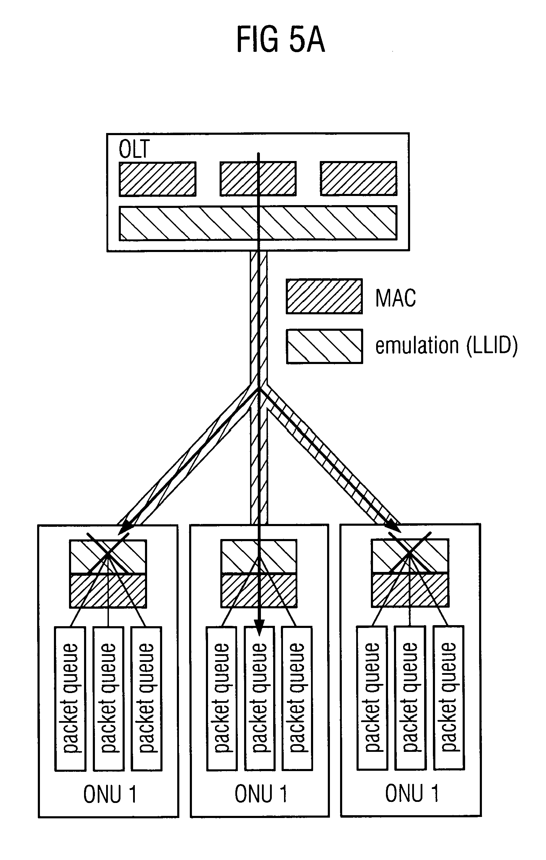

To allow full P2P emulation, the OLT must have N MAC interfaces (ports), each one associated with each existing and registered LLID (see FIG 5a). When sending a frame downstream, the emulation manager in the OLT will insert the LLID associated with a particular MAC port on which the frame arrived and, even though the frame will be delivered to each ONU (in the downstream the EPON is purely broadcast due to the multidirectional properties of the PSC (Passive Splitter Combiner located in the Remote Node, placed somewhere in the field), only the ONU with the matching LLID number can accept the frame (packet filtering) and pass it to its MAC layer for further processing. The MAC layers in all remaining ONUs will never see this particular data frame. Therefore, it may be considered that the employed P2P emulation mechanism makes the packet frame appear to have been transmitted over a true P2P connection.

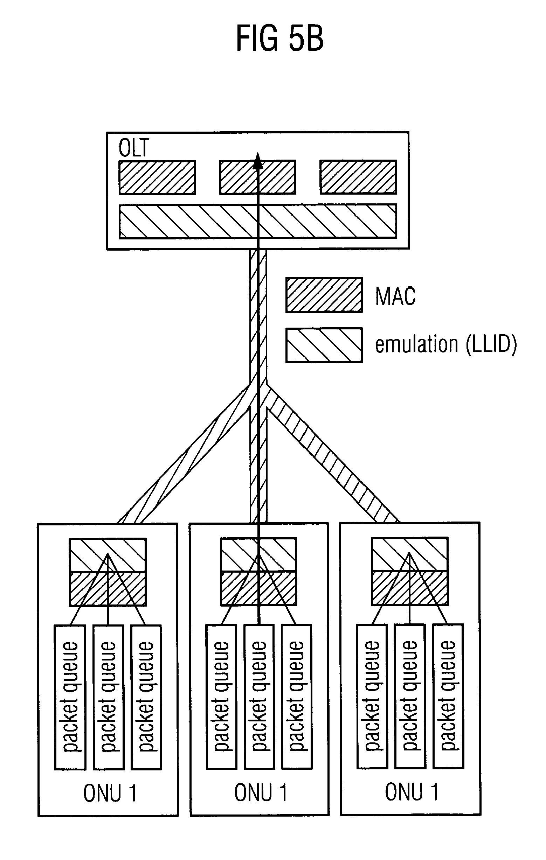

In the upstream direction, the ONU will tag the pre-assigned LLID value in the preamble of each transmitted frame. The emulation function in the OLT will de-multiplex the frame to the proper MAC port based on the unique LLID (see FIG 5b).

### One LLID per ONU

In this configuration, an ONU is allocated a single LLID, which is therefore associated with all the packet queues supported by the given ONU. Effectively, such a solution produces an hierarchical scheduling structure, where the central controller (scheduler) running in the OLT assigns a single aggregated slot to a particular LLID (corresponding in this case to a particular ONU) and it is the ONU's responsibility to distribute this slot among multiple traffic queues supported in its memory buffer, using a low-level scheduler operating inside the ONU (see FIG 2). The main advantage of this scheme is the reduced bandwidth consumption by MPCP messages needed to schedule ONUs transmissions (only one REPORT / GATE message pair is needed per upstream transmission slot).

### Preemtive priority queuing in ONU

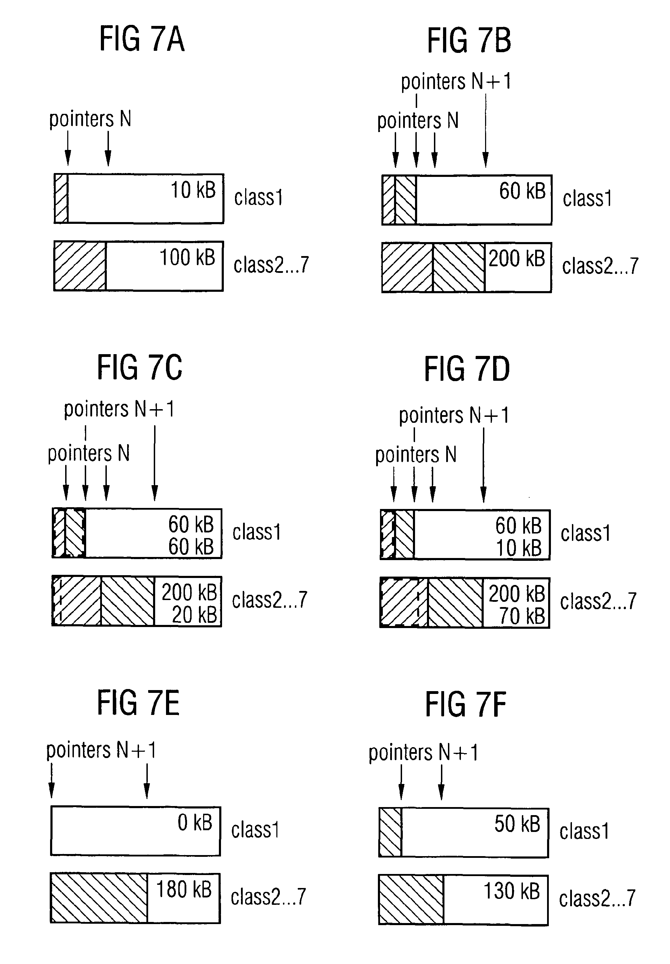

It is well known that, in a strict priority queuing scenario, low-priority queues could suffer from bandwidth starvation (the so called light load penalty, first identified in G. Kramer, B. Mukherjee, S. Dixit, Y. Ye, and R. Hirt, "Supporting differentiated classes of service in Ethernet passive optical networks," OSA Journal of Optical Networking, vol. 1, pp. 280-298, 2002). Such a phenomenon is caused by the fact that, during the time interval between the ONU reports the current queue states and the corresponding GATE message arrives (i.e., between sending a REPORT and actual transmission of the reported data), more packets arrive to all supported queues. The newly arrived packets may have higher priority than the packets already present in the ONU buffer and included in the previous REPORT message transmitted to the OLT. The new high priority packets will preempt lower-priority packets and will be transmitted upstream within the next transmission slot. Moreover, since these packets were not reported to the OLT yet, the slot cannot accommodate all the stored packets, and thus part of the lower priority ones remain in their respective queues even though originally they were scheduled for transmission (see FIG 7).

Let's consider the *n^{th}* cycle for an ONU with two priority queues (only two for simplicity of explanation, but the following reasoning might be easily extended for a larger number of queues). The high priority queue has 10 kB of data, while the lower priority queue in total has 100 kB stored (FIG 7a). The ONU creates a REPORT message, indicating 110 kB of total data buffered The central scheduler in the OLT grants the transmission slot of the total size of 80 kB, so part of the lower priority data shall remain in the buffer (the total amount of the aggregated low priority traffic within the network might be significant already). During the (*n*+*1*)^{th} cycle, more data arrives at the given ONU, let's say additional 50 kB of high priority data along with some 100 kB of lower priority data (FIG 7b) and now the ONU will have 60 kB of high priority data along with 200 kB of lower priority data buffered and waiting for transmission. At this moment the GRANT message arrives, allowing for upstream transmission of 80 kB of data in total. Providing that typical intra-ONU priority-oriented packet scheduling is utilized, the ONU will schedule 60 kB of high priority data along with only 20 kB of lower priority data for transmission during the following transmission slot (FIG 7c), and that results in the high priority buffer emptying completely while part of the originally reported low priority data is left within the corresponding buffer (FIG 7e). The optimum situation is depicted in FIG 7d and FIG 7f, where the ONU supports the non-preemptive packet scheduling model and, upon receiving the 80 kB grant, allows for transmission of only 10 kB of high priority and full 70 kB of low priority data, leaving the data from the (*n*+*1*)^{th} cycle intact and waiting for the next transmission cycle.

The light load penalty generally results in lower priority packets being delayed for several cycles before actual transmission occurs. It is also a general observation that, the lower the priority of a given packet, the more it is likely to suffer from the light load penalty. An additional side-effect of such scheduler operation is the packet delineation problem, because the packet delineation bounds change when unscheduled packets occupy the slot allocated for a different packet size population reported to and scheduled by the OLT. Since Ethernet packets cannot be fragmented (because they have to remain in compliance with the IEEE 802.3), packet preemption results in an unused slot remainder (unless pre-empting higher-priority packets have the same total size as preempted lower-priority packets, which is statistically possible though with low probability).

Non-preemtive priority queuing in ONU

The problem of the light load penalty can be mitigated through the application of a non-preemptive priority packet scheduler in the ONU. In this operation mode, the ONUs can transmit only previously-reported packets, even if more higher-priority packets arrive after the last REPORT was sent. Non-preemptive queuing can be implemented, for example, as a two-stage buffer or by maintaining a system of pointers to the last reported packet in each queue (FIG 7).

Either approach solves the problem of packet delineation overhead, and ensures that the unused transmission slot remainder is exactly zero if the OLT grants slot size based on the reported threshold. Additionally, the light load penalty may be fully eliminated as a side effect, by using a more complex packet scheduling mechanism. However, it has been reported that non-preemptive queuing increases queuing delay, since all packets will have to wait a full cycle between being reported and being transmitted.

The increased delay in a non-preemptive priority queuing scheme can become a problem, especially if time-critical packets are delayed beyond their tolerance values. High-priority data packets conveying system critical information, such as system alarms, failure indication, etc., may arrive at the destination point suffering from extended delay due to packet queuing inside of a non-preemptive packet buffering system, in the ONU. This is especially important in the case of real-time voice transmission. ITU-T Recommendation G.114, entitled *"One-way transmission time",* specifies 1.5 ms one-way propagation delay in the access network (digital local exchange) and, to keep the maximum delay within this bound, the polling cycle time for the EPON network using non-preemptive schedulers in the ONUs must be reduced to 750 ns or less. This in turn significantly increases the guard band and scheduling overheads.

### Rate-proportional packet schedulers in ONU

An alternative solution may be to use any of the fair-queuing or proportional-rate schedulers available for EPONs:
- weighted fair queuing (WFQ),
- worst-case fair weighted fair queuing (WF2Q),
- virtual-clock fair queuing (VCFQ),
- self-clocked fair-queuing (SCFQ),
- start-time weighted fair queuing (STFQ),
- weighted round robin (WRR),
- deficit round-robin,
- carry-over round robin, etc.
   Such schedulers allocate each queue a fixed fraction of the total bandwidth (or fraction of an upstream transmission slot) allocated to a given ONU by the OLT. Generic algorithms can be further enhanced by deployment specific features, though there are several problems:
- there is no way for the OLT to foresee how many packets each queue would transmit within each upstream transmission slot (unless the OLT knows exactly all packet sizes in each queue);
- the number of packets transmitted by a queue would not correspond to the threshold reported in the REPORT message, especially if the queue is allowed to use excess bandwidth;
- an assigned slot will have an unused remainder, even if the OLT chooses a slot size for an ONU exactly equal to the sum of thresholds reported by that ONU; this has been estimated and was evaluated to be of approximately 600 bytes, which results in over 150 Mbps of bandwidth lost in a 32 ONU system;
- the fair bandwidth sharing objective can only be achieved between queues of the same ONU, but not between queues located in different ONUs; thus, two queues with identical SLAs and identical backlog of packets may get different service quality;
- the queue arbitration decisions are delegated to the ONU and, while there is no universal protocol to setup per-queue parameters in the ONU, vendors may use different intra-ONU scheduling algorithms, so the sets of parameters required would be different. In addition to resulting in more complicated and costly ONUs, this problem would decrease interoperability and complicate testing procedures.

### Single LLID per queue

Instead of delegating the packet scheduling tasks to ONUs, it is much simpler to allocate a single LLID to each packet queue supported by an ONU (see FIG 3). This allows eliminating the need for any intra-ONU packet scheduler or ingress traffic shapers, and concentrates all the required network logical processing in the OLT.

In such a scenario, the central packet scheduler located in the OLT receives a separate REPORT message from each individual LLID, representing just one packet queue. Since the OLT issues a separate GATE message for each LLID, it can easily limit one queue while giving more excess bandwidth to another queue. The ONU in this case becomes very simple, since it is only obligated to perform the operations requested by the OLT in the appropriate GATE message.

The multiple LLID per ONU approach produces a higher scheduling overhead, since as many additional MPCP exchange events have to occur in the system as there are more LLIDs to schedule transmissions from. However, it has been estimated that this scheduling overhead is compensated to a certain extent by the lack of slot remainders, and thus the additional message exchange does not generally cause overall system deterioration in terms of upstream channel bandwidth loss.

Using independent GATE messages per LLID (virtually per traffic queue) allows the OLT to support service for traffic classes with different polling cycle lengths. Low priority packets (generated by ftp sessions, file exchange, etc.) are typically delay-insensitive, and thus the overall system performance is known to increase if the corresponding data queues were served less often but the granted slot size was larger (less transmission overhead per session). Real-time, delay sensitive voice traffic, on the other hand, is typically low in volume, and thus it makes sense to poll the associated queue more frequently with smaller slot sizes. However, an excessive number of individual traffic queues scheduled and serviced directly from the OLT might cause an overall increase in the amount of MPCP signalling, assuming that strong queue fragmentation occurs.

Therefore, the single LLID per queue scenario is typically considered adequate for strict queue count limited solutions, where a single ONU is allowed to host a finite and limited (typically up to 8 - 10) number of packet buffers. It is therefore concluded that the single LLID per queue scenario is not scalable in terms of the supported number of individual LLIDs, and thus its scheduling capabilities are limited, in the case of complex systems.

Standard MPCP GATE (Opcode 00-02)

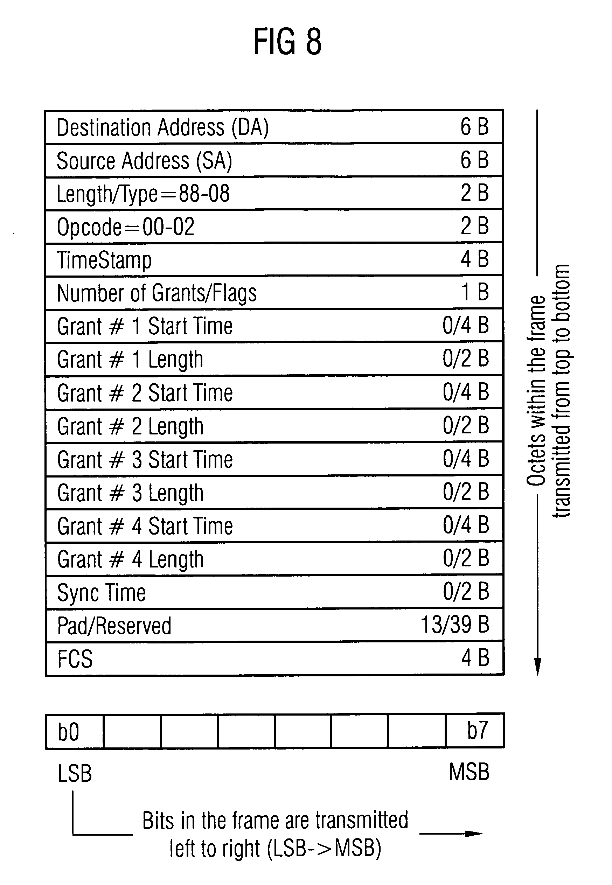

The purpose of the GATE message is to grant transmission windows to ONUs for both discovery messages and normal transmission cycles. A single MPCP GATE can convey up to four individual grants, from which the first one is used in the current cycle and the following are scheduled by the OLT into the future, indicated by the value of the appropriate **Grant #n Start time** fields. The number of grants conveyed within a single GATE can also be set to 0, when the GATE is simply used to keep the connection between the OLT and ONU alive, in order to prevent ONUs automatic deregistration under very light traffic conditions. The MPCP GATE (00-02) is an instance of a generic MPCPDU message, and has the following data fields (see FIG 8):
- ***Destination Address (DA).*** The DA in a MPCPDU is the MAC Control Multicast address, as specified in the annexes to IEEE 802.3 ah clause 31, or the individual MAC address associated with the port to which the MPCPDU is destined;
- ***Source Address (SA).*** The SA in a MPCPDU is the individual MAC address associated with the port through which the MPCPDU is transmitted. For MPCPDUs originating at the OLT end, this can be the address of any of the individual MAC ports. These MAC ports may all share a single unicast address, as explained in IEEE 802.3 ah, clause 64.1.2;
- ***Length*/*Type*.** MPCPDUs are always Type encoded, and carry the *MAC_Control_Type* field value as specified in IEEE 802.3 ah, clause 31.4.1.3;
- ***Opcode*.** The *opcode* identifies the specific MPCPDU being encapsulated. Values are defined in IEEE 802.3 ah, Table 31A-1;
- ***Timestamp.*** The timestamp field conveys the content of the *localTime* register at the time of transmission of the MPCPDUs. This field is 32 bits long, and counts 16 bit transmissions. The timestamp counts time with a 16 bit time granularity (1 TQ = 16 ns = 2 B @ 1 Gbps);
- ***Flags***. This is an 8 bit register that holds the following flags (Table 1):
   o The *Number of grants* field contains the number of grants, composed of valid *Length, Start Time* pairs in the MPCPDU. This is a number between 0 and 4. If *Number of grants* is set to 0, the sole purpose of the message is conveying a timestamp to an ONU;
   o The *Discovery flag* field indicates that the signaled grants would be used for the discovery process, in which case a single grant shall be issued in the gate message;
   o The *Force Report* flag fields ask the ONU to issue a REPORT message related to each corresponding grant number at each corresponding transmission opportunity indicated in this GATE;
- ***Grant #n Length**.* Length of the signaled grant, this is a 16 bit unsigned field. The length is counted in 16 bit time increments. There are 4 Grants that are possibly packed into the GATE MPCPDU. The *laserOnTime, syncTime, and laserOffTime* are included in and thus consume part of the *Grant #n Length;*
- ***Grant #n Start Time.*** Start time of the grant, this is a 32 bit unsigned field. The start time is compared to the local ONU clock, to correlate the start of the grant with the pre-defined moment of time, estimated by the OLT scheduler relative to the OLT clock. Transmitted values shall satisfy the condition *Grant #n Start Time* < *Grant #n*+*1 Start Time* for consecutive grants within the same GATE MPCPDU;
- ***Sync Time.*** This is an unsigned 16 bit value indicating the required synchronization time of the OLT receiver. During the synchronization time the ONU shall send IDLE code-pairs. The value is counted in 16 bit time increments. The advertised value takes into account the synchronization requirements for all receiver elements, including PMD¹, PMA², and PCS³. This field is present only when the gate is a discovery gate, as signaled by the Discovery flag, and is not present otherwise;
- ***Pad*/*Reserved.*** This is an empty field that is transmitted as zeros and ignored on reception, when constructing a complying MPCP protocol implementation. The size of this field depends on the used *Grant #n Length*/*Start Time* entry-pairs, and accordingly varies in length from 13 to 39.

The standard GATE (00-02) does not allow therefore for granting a single queue of a multiple-queue LLID entity, thus forcing such LLID to perform all packet scheduling tasks internally. This in turns reduces the system design flexibility, since the network manager can only rely either on solution 1, where all the negative side effects of intra-ONU packet scheduling are likely to occur, or on assigning one LLID per queue, producing a complex network structure and most likely over-provisioning the DBA tasks.

**Table 1: GATE MPCPDU (Opcode 00-02) Flags field.**

| **Bi**t | **Flag field** | **Values** |
|---|---|---|
| 0-2 | Number of individual grants | 0-4 |
| 3 | Discovery | 0 - normal GATE; |
| | | 1- DISCOVERY GATE. |
| 4 | Force REPORT grant 1 | 0 - no REPORT required; |
| | | 1- REPORT MPCPDU should be added after the end of the corresponding upstream transmission slot. |
| 5 | Force REPORT grant 2 | 0 - no REPORT required; |
| | | 1- REPORT MPCPDU should be added after the end of the corresponding upstream transmission slot. |
| 6 | Force REPORT grant 3 | 0 - no REPORT required; |
| | | 1- REPORT MPCPDU should be added after the end of the corresponding upstream transmission slot. |
| 7 | Force REPORT grant 4 | 0 - no REPORT required; |
| | | 1- REPORT MPCPDU should be added after the end of the corresponding upstream transmission slot. |

In most cases, it is expected that a single LLID can service several traffic queues with similar delay boundaries, thus assigning such similar traffic queues to a single LLID would reduce the required signalling overhead, allowing at the same time to equip ONUs with more generic software and reduce the necessary processing capabilities (eliminate any intra-ONU packet scheduling). Therefore, all processing logics could be concentrated in the OLT, while the ONUs tasks would be reduced to simple packet storing and upstream channel transmission

### Standard MPCP REPORT (Opcode 00-03)

A standard REPORT MPCP message conveys current information on queue lengths of up to 8 queues, represented by ***Queue #n report*** fields (see FIG 4). Additionally, the ***Time stamp*** field in each REPORT message is used for round trip time (RTT) calculation (ranging process), used by the OLT to estimate the transmission delay in the upstream and downstream directions. In the REPORT messages, the respective ONUs indicate the upstream bandwidth needs they request per 802.1Q priority queue. REPORT messages are also used as a means of keeping the particular LLIDs alive, since the lack of upstream transmission from a given LLID for longer than time-out threshold results on deregistration of the respective LLID from the active LLID list in the OLT (IEEE 802.3 ah clause 64.3.4).

The reported queue lengths should be adjusted to account for the necessary frame preamble, inter-frame spacing, and FEC parity overhead, even though this additional data may be not physically present in the queue. In other words, this field represents not the actual queue length, but the transmission window size required to transmit the data stored in the queue associated with a given LLID address.

The standard REPORT MPCPDU (Opcode 00-03) is an instantiation of the Generic MPCPDU, and is further extended by defining the particular meaning of the data fields:
- ***Destination Address (DA).*** The DA in a MPCPDU is the MAC Control Multi-cast address, as specified in the annexes to IEEE 802.3 ah, clause 31, or the individual MAC address associated with the port to which the MPCPDU is destined;
- ***Source Address (SA).*** The SA in a MPCPDU is the individual MAC address associated with the port through which the MPCPDU is transmitted. For MPCPDUs originating at the OLT end, this can be the address of any of the individual MAC ports. These MAC ports may all share a single unicast address, as explained in IEEE 802.3 ah, clause 64.1.2;
- ***Length*/*Type*.** MPCPDUs are always Type encoded, and carry the *MAC_Control_Type* field value as specified in IEEE 802.3 ah, clause 31.4.1.3;
- ***Opcode*.** The opcode identifies the specific MPCPDU being encapsulated. Values are defined in IEEE 802.3 ah, Table 31A-1; The opcode for the REPORT MPCPDU is 00-03;
- ***Timestamp.*** The timestamp field conveys the content of the *localTime* register at the time of transmission of the MPCPDUs. This field is 32 bits long, and counts 16 bit transmissions. The timestamp counts time with a 16 bit time granularity (1 TQ = 16 ns = 2 B @ 1 Gbps);
- ***Number of Queue Sets.*** This field specifies the number of requests in the REPORT message. A REPORT frame may hold multiple sets of ***Report bitmap*** and ***Queue #n*** as specified in the ***Number of Queue Sets*** field;
- ***Report bitmap.*** This is an 8 bit flag register that indicates which queues are represented in this REPORT MPCPDU (Table 2).
- ***Queue #n Report.*** This value indicates the length of ***queue# n*** at time of the REPORT message generation. The reported length shall be adjusted to account for the necessary inter-frame spacing and FEC parity data overhead, if FEC is enabled. The ***Queue #n Report*** field is an unsigned 16 bit integer indicating the transmission request in units of time quanta. This field is present only when the corresponding flag in the *Report bitmap* is set.
- ***Pad*/*Reserved*.** This is an empty field that is transmitted as zeros and ignored on reception, when constructing a complying MPCP protocol implementation. The size of this field depends on the used *Queue #n Report* entries, and accordingly varies in length from 0 to 39.

Assuming that some LLID reports correctly the current queue length, it is very likely that the OLT will grant a timeslot smaller than what was requested by the LLID in question. Lacking any additional knowledge about queue's composition, the OLT is not able to grant a smaller timeslot which exactly fits some number of frames, and thus the problem of packet delineation and slot remainder occurs. Since Ethernet frames cannot be fragmented, a frame that does not fit in the slot remainder will have to be deferred to the next timeslot, leaving an unused remainder in the current timeslot.

To cope with this situation, the standard MPCP REPORT (*Opcode* 00-03) message may contain multiple queue sets. Each queue set reports a cumulative length (including the overhead) of a subset of queued packets, always starting from the head of the queue.

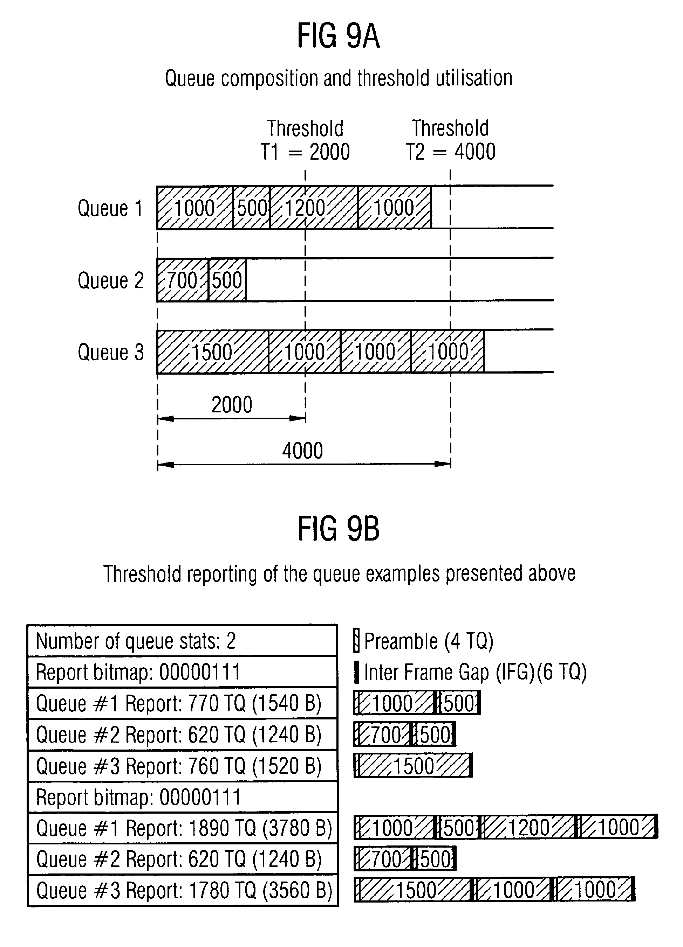

If the OLT is unable to grant the entire queue length, it may choose the slot length equal to any of the reported values, and such timeslot will not have wasted bandwidth due to packet delineation remainders. The standard is vague about how the subsets of packets should be determined. The original idea, discussed and adopted by the EFM task force, assumed that several thresholds would be specified for each queue. Then, the reported queue length would be equal to the length of all packets (including the overhead) not exceeding a specified threshold (see FIG 9). However, since the MPCP REPORT messages are generated by a DBA client, which is outside the scope of the standard, the formal definition for multiple thresholds was never specified.

**Table 2: REPORT MPCPDU (Opcode 00-03) Report bitmap field.**

| **Bit** | **Flag fiel**d | **Values** |
|---|---|---|
| 0 | Queue 0 | 0 - queue 0 report is not present |
| | | 1 - queue 0 report is present |
| 1 | Queue 1 | 0 - queue 0 report is not present |
| | | 1 - queue 0 report is present |
| 2 | Queue 2 | 0 - queue 0 report is not present |
| | | 1 - queue 0 report is present |
| 3 | Queue 3 | 0 - queue 0 report is not present |
| | | 1 - queue 0 report is present |
| 4 | Queue 4 | 0 - queue 0 report is not present |
| | | 1 - queue 0 report is present |
| 5 | Queue 5 | 0 - queue 0 report is not present |
| | | 1 - queue 0 report is present |
| 6 | Queue 6 | 0 - queue 0 report is not present |
| | | 1 - queue 0 report is present |
| 7 | Queue 7 | 0 - queue 0 report is not present |
| | | 1 - queue 0 report is present |

The present invention is therefore directed to mitigate the limitations of the above mentioned solutions. The object of the invention is achieved in the features of claim 1, 7, 8, and 9.

Under the inventive method for controlling accesses to a shared medium between a central communication unit and at least one peripheral communication unit, there is at least one logical connection established between the central communication unit and the at least one peripheral communication unit. Several queues, which are located in the at least one peripheral communication unit, are assigned to the at least one logical connection, whereby status-information of the respective assigned queues are transmitted to the central communicate unit and are evaluated centrally. Dependent on the result of the evaluation at least one control message is generated by the central communication unit and sent to the at least one peripheral communication unit. The control message contains information for controlling the processing of the queues assigned to the at least one logical connection.

Further advantageous embodiments of the method including a system, a central and peripheral communication unit for controlling accesses according to the invention will emerge from the further claims.

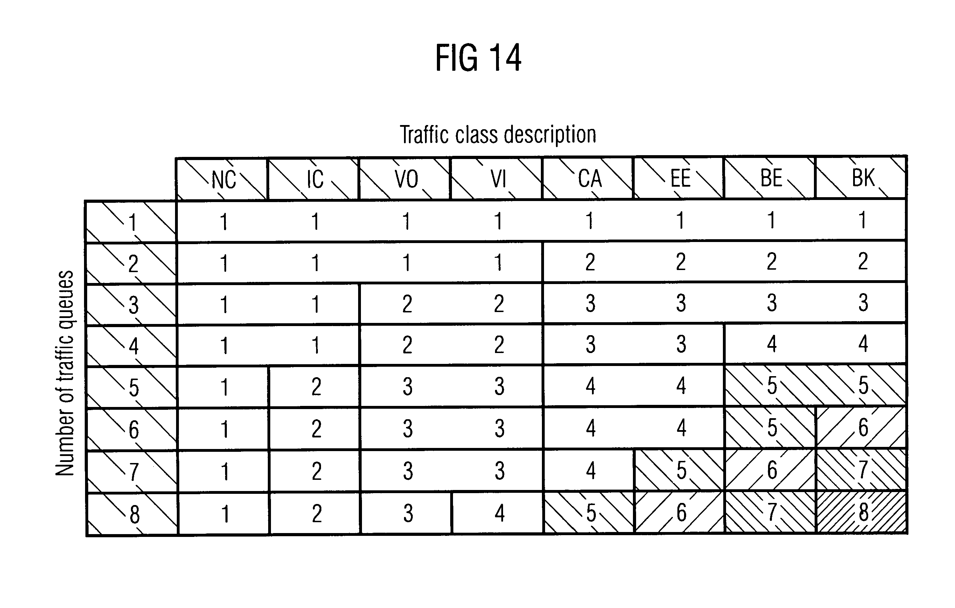

The method according to the invention is explained in more detail below with references to several drawings, in which
- FIG 1: shows a MPCP operation, especially a two-way messaging assignment of time slots for upstream transmission between ONU and OLT.
- FIG 2: shows one logical link per ONU (hierarchical scheduling)
- FIG 3: shows one logical link per queue (single-level scheduling)
- FIG 4: shows a standard MPCP REPORT (Opcode 00-03) message structure (IEEE 802.3 ah clause 64)
- FIG 5: shows a Point-to-point emulation in EPON:
a) downstream,
b) upstream transmissions
- FIG 6: shows LLID assignment policies:
a) LLID - 1 ONU,
b) 1 LLID - 1 queue,
c) scenario according to the invention:
   1 LLID - multiple queues - 1 ONU.
- Fig 7: shows a light traffic penalty problem illustration:
a) ONU queues during the nth cycle,
b) additional data from (n+1)^{th} cycle,
c) standard intra-ONU priority-oriented packet scheduling,
d) optimum packet scheduling (GRANT driven packet scheduling),
e) result of standard intra-ONU priority-oriented packet scheduling,
f) result of optimum packet scheduling (GRANT driven packet scheduling).
- FIG 8: shows a standard MPCP GATE (Opcode 00-02) message structure (IEEE 802.3 ah, clause 64).
- FIG 9: shows a example of queues composition and reported values in case of queue threshold application

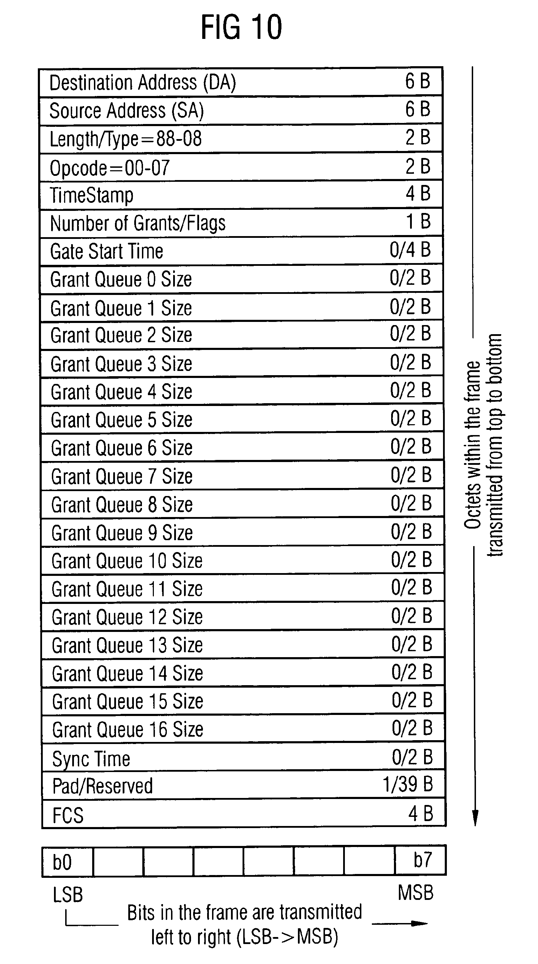

- FIG 10: shows Internal structure of the proposed eGATE MPCP (Opcode 00-07) according to the invention

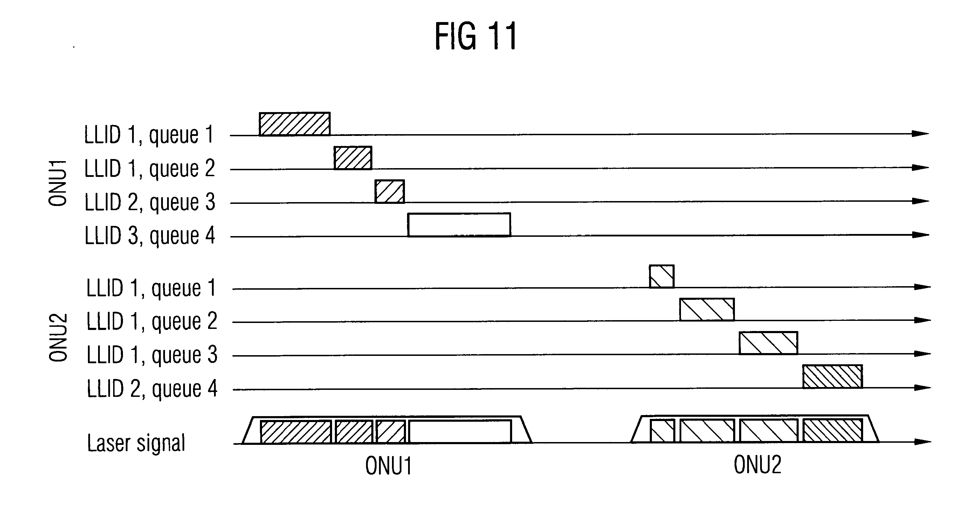

- FIG 11: shows various transmission scenarios enabled with extended MPCP GATE (Opcode 00-07)

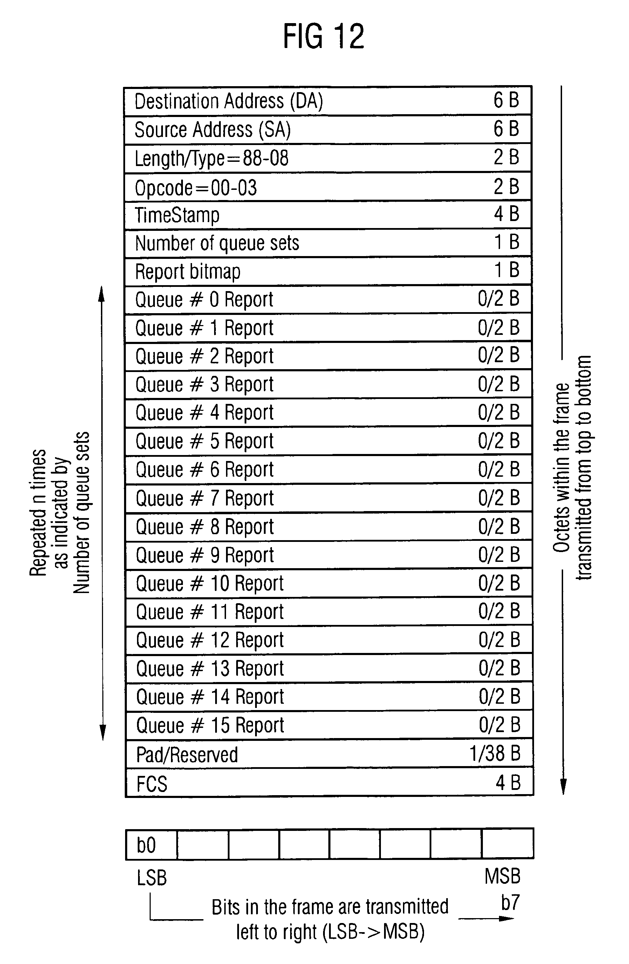

- FIG 12: shows the Internal structure of the proposed eREPORT MPCP (Opcode 00-08) message according to the invention

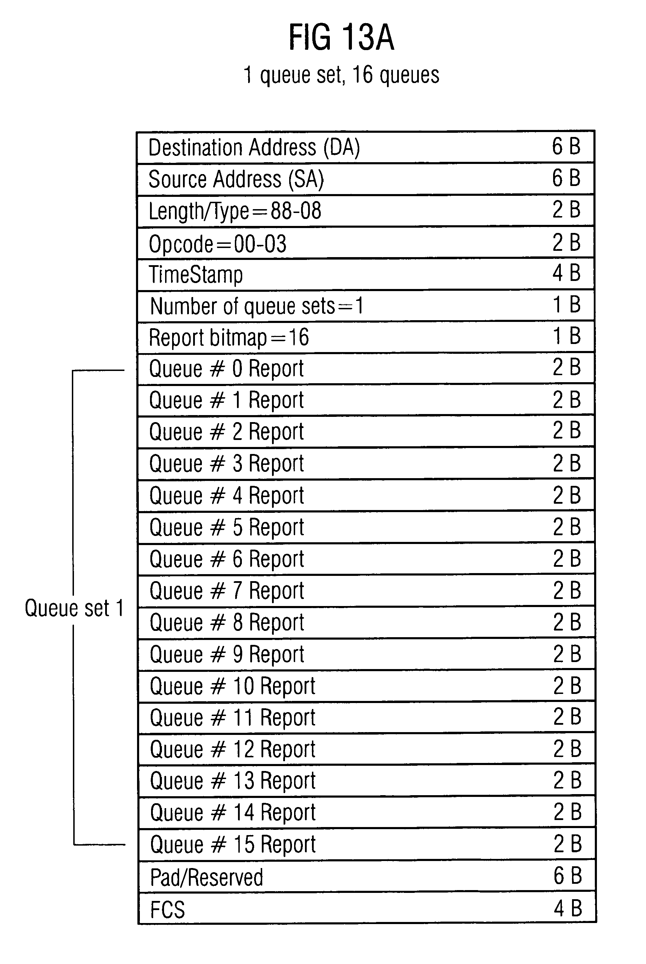

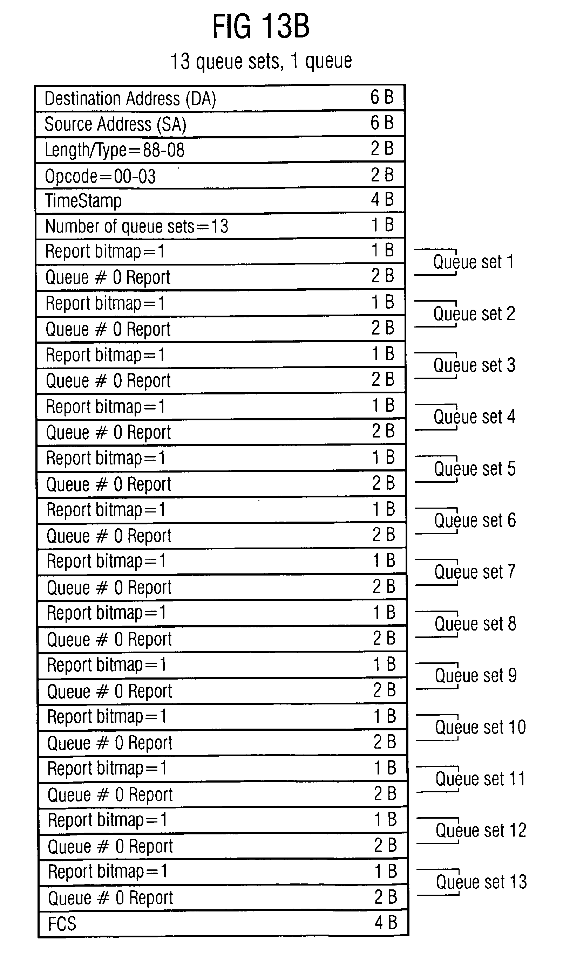

- FIG 13: shows two examples of eREPORT messages:
a) 1 queue set with 16 queues per LLID,
b) 13 thresholds for a single queue in a LLID
- FIG 14: Traffic class mapping into supported number of queues (IEEE 802.1q, annex G).

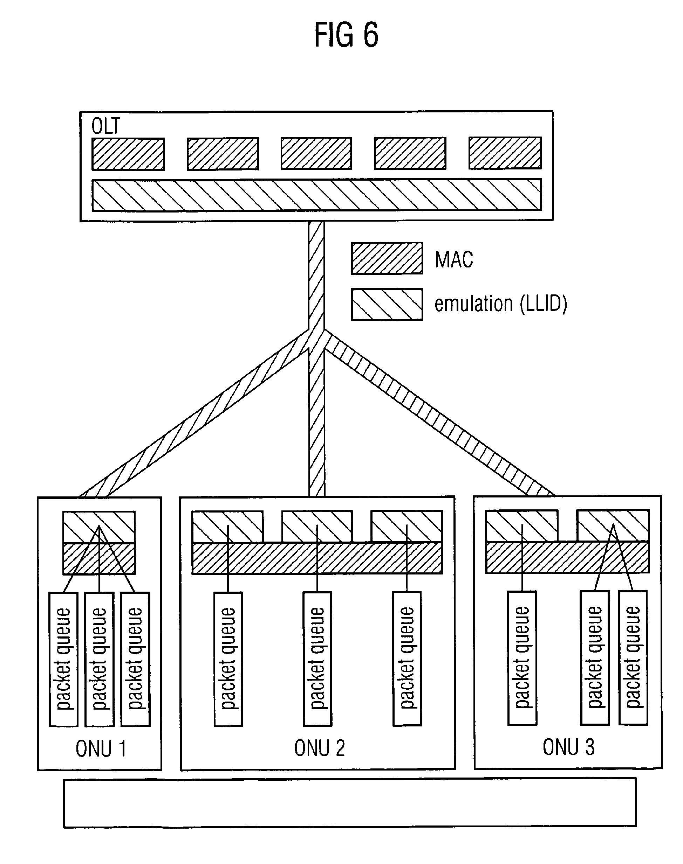

To mitigate the limitations of the above mentioned solutions,
- 1 LLID per ONU (see FIG 2)
- 1 LLID per queue (see FIG 3)
in terms of LLID assignment policy, the method according to the invention is using a multiple LLID per ONU - multiple queue per LLID system (see ONU 3 FIG 6) with inherent elimination of the packet delineation problem.

According to the invention the currently limited structure of the IEEE 802.3 ah compliant GATE message is extended by crafting new MPCP GATE and REPORT messages, sharing the same internal structure and size (64 bytes), though conveying a set of different information when compared with the standard GATE (Opcode 00-02) and REPORT (Opcode 00-03).

### Extended MPCP GATE (proposed Opcode 00-07)

The purpose of the extended GATE (eGATE) MPCP message is to allow for granting up to 16 individual traffic queues per LLID, enabling the OLT level scheduler to gain access directly into the particular LLID supported queues. Such a solution allows therefore to group packet buffers storing the same traffic type into a single LLID entity and then grant them individually from the OLT level so as to eliminate any possible packet delineation problems and upstream slot remainders, caused by ONU based packet schedulers operating on a single, aggregate grant value conveyed within the standard GATE MPCP (00-02) message. Therefore, the proposed eGATE MPCP message allows to extend the existing solutions (1 LLID per ONU, 1 LLID per queue) into a multiple LLID per ONU / multiple queue per LLID scenario, where e.g. 16 queues of real-time streaming traffic, collecting data from individual subscribers, would be allocated to a single LLID entity, which is then efficiently scheduled and polled from the OLT level using a single GATE message instead of issuing 16 individual ones.

The structure of the eGATE MPCP message would have to be reconstructed. Since the eGATE is intended as a means for efficiently granting a large number of queues associated with a single LLID entity, there is no support for granting into the future. Therefore, the eGATE contains only one ***Gate Start Time*** field, indicating the start time of the transmission slot originating from a particular LLID. This field maintains its 32 bit size (4 bytes) and is counted relatively to the local clock of the ONU (synchronized with the central OLT clock). The first grant allocated to the given LLID queue starts when the internal ONU clock reaches the value equal to the time stamp conveyed within the ***Gate Start Time*** field; the following queues shall produce packets in a continuous manner, so that the upstream transmission from two individual LLID queues is separated by the standard Ethernet gap of 10 TQ (4 TQ of preamble and 6 TQ of actual Ethernet Inter Frame Gap). This way, transmissions from a single LLID supporting multiple queues can be scheduled in such a way that they fit into a single upstream slot envelope, and the transmission laser is not switched off when changing the packet source from one queue to another.

The ***Gate Start Time*** field is to be followed by a series of 16 (at most) individual grants, scheduled for individual packet buffers supported by a given LLID. A single LLID can therefore support at maximum 16 individual packet queues, where the first LLID queue corresponds to the first ***Grant Queue #n Length*** field. Therefore, if a given queue is not granted any transmission slot (has no packets pending or the central scheduler did not assign any packets for this particular queue), the corresponding ***Grant Queue #n Length*** field shall contain the 0 byte grant, to indicate no transmission window.

The ***Number of Grants*/*Flags*** field maintains its size (1 byte), though is internally reconstructed (Table 3):
- 5 first bits are reserved for the grant count (acceptable values ranging from 0 to 16; 0 grant eGATE shall be used to keep the given LLID alive in a manner consistent with the original MPCP GATE);
- 1 bit shall be reserved for eGATE type indication (normal - 0, DISCOVERY GATE - 1);
- 1 bit shall be reserved for eGATE REPORT indication (0 - no REPORT MPCP is requested; 1 - once the slot transmission is completed, the MAC agent associated with the given LLID shall produce the MPCP REPORT for the current LLID).

**Table 3: eGATE MPCPDU (Opcode 00-07) Flags field.**

| **Bit** | **Flag field** | **Values** |
|---|---|---|
| 0-4 | Number of individual grants | 0-16 |
| 5 | Discovery | 0 - normal GATE; |
| | | 1- DISCOVERY GATE. |
| 6 | Force REPORT | 0 - no REPORT required; |
| | | 1- REPORT MPCPDU should be added after the end of the corresponding up-stream transmission slot. |
| 7 | Unused/Reserved | Ignored on reception. |

The proposed structure for the eGATE MPCP message is depicted in FIG 10.

In order to maintain backward compatibility with the existing MPCP messaging systems and already developed solutions, it is proposed that the next extended GATE MPCP message is assigned a new *Opcode* (00-07) from the list of reserved *Opcodes* (IEEE 802.3 ah, Table 31A-1). Assigning a different *Opcode* to the proposed MPCP message allows for both GATE messages (*Opcodes* 00-02 and 00-07) to coexist in the same network structure, without collisions. The ONU would be responsible for remaining compliant with the extended GATE format and proper GATE identification, based on the *Opcode* field value.

FIG 11 depicts the operation of a EPON supporting the eGATE MPCP message. ONU 1 has 4 queues and 3 LLIDs (LLD 1 - queues 1, 2; LLID 2 - queue 3; LLID 3 - queue 4). Using both standard and extended GATE messages to poll individual LLIDs, it is possible to schedule transmissions from individual LLIDs in such a manner that a continuous upstream slot envelope is maintained and the laser does not switch off in between transmissions from individual LLIDs. Additionally, application of the eGATE for LLID 1 allows granting the associated queues individually as if they were allocated individual LLIDs.

### Extended MPCP REPORT (possible Opcode 00-08)

The original MPCP REPORT (*Opcode* 00-03) allows reporting the current state of at maximum 8 queues, using the MPCP structure depicted in FIG 4. The limitation on the number of queues is imposed by the ***Report bitmap*** field construction, where a simple flagging mechanism was used to indicate the number of conveyed queue state reports.

However, the proposed eGATE MPCP message has the maximum capacity of at maximum 16 individual grants, thereby requiring a corresponding and complementary REPORT message should also have the maximum capacity of 16 reports to be able to convey current information about the packet queues associated with a given LLID. The current standard REPORT message can be subject to a simple modification of the ***Report bitmap*** field, and thus a new MPCP message (hereinafter termed eREPORT) with a newly allocated *Opcode* 00-08 is created. The new *Opcode* is assigned to maintain full backward compatibility with the existing software and hardware solutions.

The aforementioned modification in the ***Report bitmap*** field includes value coding (instead of flag coding) of the number of conveyed queue reports. Since the maximum capacity of 16 individual queue reports is required, the valid values of the ***Report bitmap*** field range from 1 to 16 (bits 0 to 4 required to encode this value). Therefore, the length of the ***Report bitmap*** field remains intact (1 byte), although the internal construction of the field is changed (Table 4).

Bits 0 to 4 are used to indicate how many consecutive queue reports are included in a given eREPORT MPCP message. It is assumed that the first LLID packet queue is reported using the first ***Queue # n report*** field. Additionally, if a given LLID packet queue shall be empty upon creation of the eREPORT message, the corresponding ***Queue # n report*** field shall contain the value 0 to indicate that the queue in question does not have any bandwidth requests. The structure of the new eREPORT MPCP message is depicted in FIG 12.

**Table 4: REPORT MPCPDU (Opcode 00-08) Report bitmap field.**

| Bit | Flag field | Values |
|---|---|---|
| 0 - 4 | Queue count | 1 to 16, to indicate how many consecutive queue reports are present |
| 5 - 7 | Reserved/Unused | Values ignored on reception |

Depending on the number of reported queues (***Report bitmap*** field and ***Number of queue sets*** field), two extreme options are possible.
1. reporting 16 queues with 1 threshold per queue (see FIG 13a);
2. reporting 1 queue with 13 thresholds (see FIG 13b).

In this aspect, the proposed eREPORT is more flexible than the original MPCP REPORT (*Opcode* 00-03) since it allows reporting simultaneously more packet queues (16 compared with 8). Additionally, a full queue threshold mechanism is also supported, and thus the REPORT message does not lose its standard functionality.

The following are major advantages of the proposed extension to the IEEE 802.3 ah, clause 64, standard:
- more flexible EPON system configuration, where currently only two extreme scenarios are possible (one LLID per ONU or one queue per LLID);
- currently, the network administrator does not have the capability to ensure efficient upstream bandwidth utilization in case of multiple queue - single LLID assignment, and thus it is not implemented;
- the proposed extended GATE MPCP message maintains full backward compatibility with the existing EPON designs/systems/equipment by introducing new MPCP messages with new *Opcodes ;*
- the proposed solution makes full application of the information conveyed by the REPORT MPCP message, concerning current state of the system buffers inside of an ONU, by assigning upstream slots to individual queues, thereby allowing for more efficient bandwidth allocation in a generic network configuration case;
- slots originating from individual queues can be maintained separately both in time and size, and therefore the OLT can also perform intra LLID scheduling without the ONU's active participation;
- the ONU structure can be further simplified by complete elimination of packet schedulers and traffic shapers, because all the required operations are performed in the central OLT scheduler and distributed to ONUs in the form of orders to comply with (store@forward operation in ONUs only);
- the ONUs become simpler to manage, because the standard 8 traffic priority queues can be mapped into any number of LLIDs, depending on the system's target complexity, the SLA between a given subscriber and the service provider, the target signalling overhead and the subscriber type:
   o with premium customers, all 8 traffic classes can be easily supported by using the 1 queue - 1 LLID approach;
   o standard residential customers might have 8 to 4 traffic queue mapping, where the incoming 8 traffic queues are mapped into 4 LLIDs using any possible combination, depending on the supported services;
- the EPON structure becomes more flexible, since:
   o the addition of new services at the subscriber side, requiring also reconfiguration of buffering policies at the ONUs, does not necessarily result in further increase in LLID count; additional new buffers might be serviced using previously defined LLID entities;
   o an arbitrary LLID assignment can be obtained, ranging from 1 LLID - 1 queue to 1 LLID - 1 ONU, through all intermediate assignment policies;
   o each ONU can support varying LLID queue assignments, e.g. 1 LLID for voice traffic, 1 LLID for video traffic, and 1 LLID for best-effort traffic servicing 2 or 3 individual queues for ftp sessions, website transfers and general data exchange;
a single ONU can house several LLIDs, each of which can be assigned a maximum of **16** individual packet queues; thus, in the extreme case of a system with **16** ONUs and **150** subscribers per ONU, instead of **2400** individual LLIDs (**16·150** = **2400**), only **150** are required, limiting the signalling overhead to **0.077 ms.** This produces a signalling overhead reduction of **93.75%** in the case of a very complex scheduling system, leaving plenty of upstream channel bandwidth available for actual data transmission and lower priority queues.

Numeric examples of the proposed solution:

### Example 1:

A standard EPON network supports 16 ONUs, each supporting 150 individual subscribers with a real-time voice streaming SLA. It is therefore expected that each ONU shall maintain 150 individual packet queues to buffer and monitor the SLA enforcement for each individual subscriber. In the case of the *single queue* - *single LLID* scenario, 150 LLIDs per ONU are required to provide services for voice streaming ***only***. No other lower traffic classes are taken into an account in this example. At the system scale, the total number of necessary LLIDs is estimated at **16·150=2400 LLIDs.** The total bandwidth required to transmit the REPORT messages in the upstream would then be: **2400·64·8 = 1228.8 kb / cycle = 819.2 Mbps** assuming 1.5 ms polling cycle (667 cycles per second). That obviously leaves almost no upstream bandwidth for transmission of useful data, regardless of the fact that IFGs are not taken into account here. It is obvious that such a complex system cannot be supported using the *single queue* - *single LLID* scenario, since the upstream channel does not have sufficient free bandwidth to support real data transmissions.

### Example 2:

In a standard EPON network with initial conditions as in Example 1 above (16 ONUs, 150 subscribers per ONU with voice streaming LLID), eGATE and eREPORT messages are supported by both OLT and ONU. 150 voice streaming queues supported by each ONU are grouped into 15 packet queue groups that are assigned a single LLID each. The total number of required LLIDs per ONU: **150/15 = 10**. The total number of LLIDs in the system: **16·15=240.** The total bandwidth required to transmit the REPORT messages in the upstream: **240·64·8 = 122.8 kb / cycle = 81.92 Mbps** assuming 1.5 ms polling cycle (667 cycles per second). It is immediately visible that the complex system with monitoring of each packet queue at the OLT level is feasible and features a signalling bandwidth reduction of (**819.2-81.92)/819.2=90%**. No functionality of the original *single queue* - *single LLID* scenario was lost, and the system can now operate efficiently and more flexibly, due to the capability of monitoring single SLA conditions and due to OLT controlled traffic shaping/policing.

### Example 3:

Example of a typical EPON system configuration using eGATE (00-07) and eREPORT (00-08) messages (standard GATE (00-02) and REPORT (00-03) messages are assumed to apply unless stated otherwise).

An EPON network with 32 ONUs, each supporting 8 traffic classes as indicated in IEEE 801.2q standard, is considered. Depending on the customer SLA, two customer classes are supported: premium customers with 8 traffic classes and full traffic policing and residential customers with 3 traffic classes supported. Let's assume that 10 ONUs in the network are used by premium customers, the rest (22) by residential customers.

Premium customer ONUs shall be assigned a single LLID per traffic queue, resulting in 8 LLIDs per ONU and **10·8 = 80** LLIDs per customer class. Standard GATE/REPORT messages are utilized for this class, thus granting into the future is supported.

The residential customer ONU shall be assigned multiple LLIDs per ONU (3) with multiple queues per LLID (using IEEE 802.1 q Annex G mapping - see FIG 14), resulting in **22·3 = 66** LLIDs per customer class. eGate and eREPORT messages are utilized here, relieving the ONU from the internal scheduling tasks and allowing operation completely free of slot remainders.

In total, the LLID assignment policy results in 146 LLIDs in the system, occupying **146*64*8 = 74.752 kb / cycle = 49.435 Mbps** of upstream bandwidth for the needs of MPCP REPORT signalling. Since no slot remainders are created in this system (each packet queue is polled individually), the only additional transmission overhead is the IFG (1890 ns per upstream transmission slot). Assuming that each upstream slot has the corresponding MPCP eREPORT/REPORT messages: **1890*146 = 275.94 kb / cycle = 183.96 Mbps** assuming 1.5 ms polling cycle length. The total transmission overhead in the system is therefore estimated at **233.395 Mbps**. Minimum usable bandwidth in the upstream channel is estimated at **766.6 Mbps**, and is 30.22% higher when compared with the *single queue single LLID* system, where the same number of queues would require 256 LLIDs (**32·8**) and **256*64*8 = 133.12 kb / cycle = 88.747 Mbps** and **1890*256 = 483.84 kb / cycle = 322.56 Mbps -** in total: **411.307 Mbps** of signalling overhead, **588.693 Mbps** available.

Additionally, since the premium class is based on standard REPORT/GRANT messages, granting into the future might additionally reduce the signalling overhead. Therefore, the above presented values are maximum, in case of transmission overhead, and minimum, in case of available bandwidth in the upstream channel.

It is worth noting that the eGATE/eREPORT messages also save a share of the downstream bandwidth, since all eGATEs transmitted in the considered scenario occupy **49.435 Mbps** of bandwidth, while with a *single queue single LLID* system the occupied bandwidth would be of **88.747 Mbps,** which is 79.5 % more.

The significant signalling overhead of **233.395 Mbps** in total is almost completely compensated by the lack of upstream slot remainders which, in the case of a 32 ONU system, typically waste approximately **180 - 220 Mbps** of upstream bandwidth. Therefore, the slightly increased upstream channel signalling overhead is compensated by the lack of slot remainders in the system.

## Claims

1. A method for controlling accesses to a shared medium between a central communication unit (OLT) and at least one peripheral communication unit (ONU),
with at least one logical connection (LLID) established between the central communication unit (OLT) and the at least one peripheral communication unit (ONU),
**characterised in that**
- several queues (packet queues), which are located in the at least one peripheral communication unit (ONU), are assigned to the at least one logical connection (LLID),
- status-information (eREPORT MPCP) of the respective assigned queues (packet queues) is transmitted to the central communicate unit (OLT) and is evaluated centrally,
- dependent on the result of the evaluation at least one control message (eGATE MPCP) is generated by the central communication unit (OLT) and sent to the at least one peripheral communication unit (ONU)
- the control message contains information for controlling the processing of the queues (packet queues) assigned to the at least one logical connection (LLID).

2. A method according to claim 1,
**characterised in that**
the queues, assigned to the at least one logical connection (LLID), are addressable by the information included by the control message (eGATE MPCP).

3. A method according to claim 1 or 2,
**characterised in that**
the shared medium is arranged as a passive optical network.

4. A method according to claim 3,
**characterised in that**
the passive optical network is arranged according to the Standard IEEE 802.3 ah.

5. A method according to one of the preceding claims,
**characterised in that**
**that** the transmission of the status-information (eREPORT MPCP) of the respective assigned queues (packet queues) and the transmission of the control message (eGATE MPCP) is realized within the scope of the Multipoint Control Protocol, MPCP.

6. A method according to one of the preceding claims,
**characterised in that**
**that** the status-information of the queues (packet queues) assigned to the at least one logical connection (LLID) are transmitted by a extended REPORT MPCP Message, and
the processing of the queues (packet queues) assigned to the at least one logical connection (LLID) is controlled by a extended GATE MPCP Message (eGATE MPCP).

7. A communication system for controlling accesses to a shared medium between a central communication unit (OLT) and at least one peripheral communication unit (ONU),
with means for establishing at least one logical connection (LLID) between the central communication unit (OLT) and the at least one peripheral communication unit (ONU),
comprising
- several queues (packet queues) located in the at least one peripheral communication unit (ONU), the queues are assigned to the at least one logical connection (LLID),
- means for transmitting status-information (eREPORT MPCP) of the respective assigned queues (packet queues) to the central communicate unit (OLT)
- means for evaluating the status-information (eREPORT MPCP) in the central communication unit (OLT),
- means for generating at least one control message (eGATE MPCP) dependent on the result of the evaluation and for sending the message to the at least one peripheral communication unit (ONU), whereby the control message contains information for controlling the processing of the queues (packet queues) assigned to the at least one logical connection (LLID).

8. Central communication unit for a communication system according to claim 7,
- with means for establishing the at least one logical connection (LLID) between the central communication unit (OLT) and the at least one peripheral communication unit (ONU),
- with means for evaluating the status-information (eREPORT MPCP)
- with means for generating the at least one control message (eGATE MPCP) dependent on the result of the evaluation and for sending the message to the at least one peripheral communication unit (ONU).

9. Peripheral communication unit for a communication system according to claim 7,
- with means for establishing the at least one logical connection (LLID) between the central communication unit (OLT) and the peripheral communication unit (ONU),
- with several queues (packet queues) located in the peripheral communication unit (ONU), the queues are assigned to the at least one logical connection (LLID),
- with means for transmitting status-information (eREPORT MPCP) of the respective assigned queues (packet queues) to the central communicate unit (OLT)
- with means for processing the queues (packet queues) assigned to the at least one logical connection (LLID) according to the control message received form the central communication unit.
